# EUROPÄISCHE PATENTSCHRIFT

(11) **EP 2 648 855 B1**
(45) Veröffentlichungstag und Bekanntmachung des Hinweises auf die Patenterteilung: **27.01.2016**
(21) Anmeldenummer: 11787800.9
(22) Anmeldetag: 22.11.2011
(51) Int. Cl.: B05B 15/12

(54) **ANLAGE ZUM LACKIEREN VON GEGENSTÄNDEN**
SYSTEM FOR PAINTING OBJECTS
INSTALLATION POUR LA PEINTURE D'OBJETS

(30) Priorität: 11.12.2010 DE 102010054212
(43) Veröffentlichungstag der Anmeldung: 16.10.2013
(73) Patentinhaber: Eisenmann SE, 71032 Böblingen (DE)
(72) Erfinder: SWOBODA, Werner, 71032 Böblingen (DE); KATEFIDIS, Apostolos, 71116 Gärtringen (DE)
(74) Vertreter: Heinrich, Hanjo
(86) Internationale Anmeldenummer: PCT/EP2011/005869
(87) Internationale Veröffentlichungsnummer: WO 2012/076117

(56) Entgegenhaltungen:
- DE-A1- 4 225 503
- DE-B4- 10 350 765
- US-A- 4 371 563
- US-B1- 6 905 577

## Beschreibung

Die Erfindung betrifft eine Anlage zum Lackieren von Gegenständen, insbesondere von Fahrzeugkarosserien oder Anbauteilen, mit
a) einer Spritzkabine, in welcher die Gegenstände mit einem Lack beaufschlagbar sind;
b) einer Einrichtung, welche einen die Spritzkabine von oben nach unten durchsetzenden Strom eines Fluids erzeugt, der beim Lackieren entstehenden Overspray und gegebenenfalls Lösemittel aufnimmt;
c) einer Wiedergewinnungsanlage zur Wiedergewinnung des Oversprays und gegebenenfalls von Lösemittel.

Wiedergewinnungsanlagen oder Abscheider für flüchtige Verbindungen, Partikelmaterialien sowie flüssige oder feste Stoffe sind beispielsweise aus der US 6 905 577 B1, der US 4 371 563 A oder der DE 42 25 503 A1 sowie der DE 30 33 277 A1 und der DE 10 2008 055 547 A1 bekannt.

Bei der manuellen oder automatischen Applikation von Lacken auf Gegenstände wird ein Teilstrom des Lackes, der im Allgemeinen sowohl Festkörper und/oder Bindemittel als auch Lösemittel enthält, nicht auf den Gegenstand appliziert. Dieser Teilstrom wird in der Fachwelt "Overspray" genannt. Im Weiteren werden die Begriffe Overspray und Lack-Overspray oder Overspray-Partikel immer im Sinne eines dispersen Systems, wie einer Emulsion oder Suspension oder einer Kombination daraus, verstanden, die allgemein fließfähig ist. Der Overspray wird von dem Fluidstrom in der Lackierkabine erfasst und einer Abscheidung zugeführt. Als Fluid wird dabei Luft verwendet, die gegebenenfalls nach einer geeigneten Konditionierung wieder in die Beschichtungskabine zurückgeleitet werden kann.

Bei bekannten Lackieranlagen der eingangs genannten Art wird der Overspray und gegebenenfalls das in dem Lack enthaltene Lösemittel einfach dadurch wiedergewonnen, dass beides zunächst in der Spritzkabine belassen und in Sammelrinnen aufgefangen wird. Aus diesen Sammelrinnen kann der wiedergewonnene Overspray dann abgezogen werden. Nachteilig dabei ist, dass der Lack in der Kabine weit verstreut ist und die Rückgewinnungsverluste sehr hoch sind. Lösemittel werden überhaupt nicht zurückgewonnen.

Aufgabe der vorliegenden Erfindung ist es, eine Anlage der eingangs genannten Art so auszugestalten, dass der Overspray mit einfachen Mitteln aus dem die Spritzkabine durchströmenden Fluid wiedergewonnen werden kann.

Die Aufgabe wird erfindungsgemäß dadurch gelöst, dass
d) die Wiedergewinnungsanlage mindestens ein im Wesentlichen senkrecht stehendes Rohr umfasst, das von dem aus der Spritzkabine herausgeführten und mit Overspray sowie gegebenenfalls Lösemittel beladenen Fluid durchströmbar ist und dessen Oberfläche so mit Erhebungen und/oder Vertiefungen versehen ist, dass sich in dem durchströmenden Fluid Wirbel bilden und der Lack-Overspray sich an der Umfangswand abscheidet und nach unten aus dem Rohr abfließt.

Die apparative Ausgestaltung der erfindungsgemäßen Wiedergewinnungsanlage ist somit denkbar einfach: Es genügen eine oder mehrere Rohre, deren Umfangswand in spezifischer Weise verformt ist. Die Verformung muss so sein, dass das Fluid das oder die Rohre nicht laminar sondern unter Wirbelbildung durchströmt. Da der Lack-Overspray verhältnismäßig schwer ist, wird er durch die Wirbel an die Rohrwand geschleudert, wo er anhaftet und sodann einfach unter dem Einfluss der Schwerkraft nach unten ausfließt. Das untere Ende dieses Rohres kann mit einem Lackbehälter verbunden werden, wo sich der wiedergewonnene flüssige Overspray ansammelt und einer Wiederverwendung zugeführt werden kann.

Besonders vorteilhaft ist diejenige Ausgestaltung der Erfindung, bei welcher das Rohr unter eine Temperatur abkühlbar ist, die dem Taupunkt des Lösemittels in dem das Rohr durchströmenden Fluid entspricht, derart, dass das Lösemittel an der Umfangswand des Rohres auskondensiert und gemeinsam mit dem Overspray aus diesem nach unten abfließt.

Durch einfache Kühlung des Rohres, das nach Anspruch 1 zunächst nur der Wiedergewinnung des Oversprays dient, kann in dem Rohr zusätzlich auch das Lösemittel wiedergewonnen werden. Das Lösemittel vereinigt sich dabei an der Umfangswand des Rohres mit dem dort anhaftenden Overspray und erleichtert dessen Abfluss.

Die Lösemittelkonzentration in dem das Rohr durchströmenden Fluid ist vorteilhafter Weise so hoch, dass der Taupunkt des Lösemittels über dem Gefrierpunkt von Wasser liegt. Derartige Konzentrationen von Lösemittel liegen zwar oberhalb der Explosionsgrenze. Wenn besondere Explosionsschutzmaßnahmen ergriffen werden, wie sie an und für sich bekannt sind, sind diese Lösemittelkonzentrationen jedoch vertretbar. Sie haben den Vorteil, dass der Taupunkt deutlich nach oben über 0° Celsius angehoben werden kann und dabei die Rohre nicht zu sehr abgekühlt werden müssen.

Die Lösemittelkonzentration sollte bei dem Lösemittel Butylacetat über 30g pro Normkubikmeter und bei dem Lösemittel Xylol über 10g pro Normkubikmeter liegen.

Wenn durch Abkühlung der Rohre, wie in Anspruch 2 angegeben, Lösemittel rückgewonnen werden, wird selbstverständlich auch das durchströmende Fluid entsprechend abgekühlt. Aus energetischen Gründen empfiehlt sich daher eine Ausgestaltung der Erfindung, bei welcher eine Wärmepumpe vorgesehen ist, welche das das Rohr durchströmende, beladene Fluid abkühlt und das gereinigte Fluid vor dessen Rückführung in die Spritzkabine wieder aufwärmt. Bei besonders hohen Anforderungen an den Grad der Wiedergewinnung von Overspray und an die Reinheit des an die Außenatmosphäre abgegebenen Fluid kann dem mindestens einen von beladenem Fluid durchströmbaren Rohr ein elektrostatisches Nachfilter nachgeschaltet sein.

In diesem Falle empfiehlt es sich, dass für den in dem mindestens einen Rohr und dem in dem elektrostatischen Nachfilter gewonnenen Overspray getrennte Lackbehälter vorgesehen sind. Dies hat seinen Grund darin, dass der in dem Rohr wiedergewonnene Overspray praktisch keine ausgehärteten Partikel enthält und direkt zur Wiederverwendung geeignet ist, während man bei dem in dem elektrostatischen Nachfilter gewonnenen Overspray damit rechnen muss, dass in gewissem Umfange Vernetzungsreaktionen stattgefunden haben. Dieser Overspray muss daher vor der Wiederverwendung filtriert werden.

Ein Ausführungsbeispiel der Erfindung wird nachfolgend anhand der Zeichnung näher erläutert; es zeigen:
- Figur 1: schematisch eine Lackieranlage;
- Figur 2: einen Ausschnitt aus einem Wärmetauscherrohr, wie es in der Anlage der Figur 1 verwendet wird.

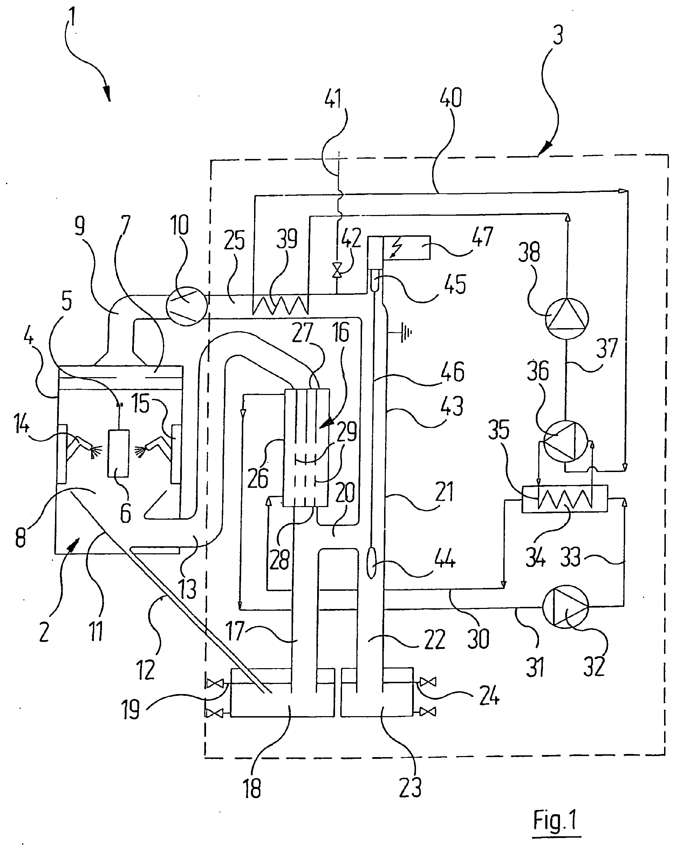

Die in Figur 1 dargestellte und insgesamt mit dem Bezugszeichen 1 gekennzeichnete Lackieranlage umfasst als Hauptkomponenten eine Spritzkabine 2 sowie eine Wiedergewinnungsanlage 3 für Lack-Overspray und Lösemittel.

Die Spritzkabine 2 ist im Wesentlichen konventionell aufgebaut. Sie umfasst ein Gehäuse 4, durch welches mit Hilfe eines schematisch angedeuteten Fördersystems 5 die zu lackierenden Gegenstände 6 senkrecht zur Zeichenebene von Figur 1 hindurchgeführt werden. Im Innenraum der Spritzkabine 2 befindet sich eine Fluidatmosphäre in Form von Luft. Hierzu wird eine kontinuierliche Luftströmung durch den Innenraum der Spritzkabine 2 von einem oberen Luftplenum 7 zu einer unteren Auslassöffnung 8 geführt, wie dies an und für sich bekannt ist. Die Luft wird über eine Leitung 9 mittels eines Gebläses 10 in das Luftplenum 7 eingebracht. Die Auslassöffnung 8 wird von einem trichterförmigen Leitblech 11 begrenzt, von dessen Grund eine verhältnismäßig enge Lackabflussleitung 12 und eine Luftabflussleitung 13 abzweigen.

Beidseits des Bewegungsweges der zu lackierenden Gegenstände 6 befinden sich Applikationseinrichtungen 14, 15, über welche ein Lack, der Lösemittel enthält, auf die Gegenstände 6 abgegeben wird. Bei dem Lackiervorgang entstehen in bekannter Weise Lack-Overspray und Lösemitteldämpfe, die gemeinsam mit der Luftströmung über die Auslassöffnung 8 in das trichterförmige Leitblech 11 eingetragen und dann in weiter unten beschriebener Weise zur Wiedergewinnung von Lack und Lösemittel behandelt werden.

Der Wiedergewinnungsanlage 3 wird über die Luftabflussleitung 13 aus der Spritzkabine 2 Luft zugeführt, welche, wie oben schon erwähnt, mit Lack-Overspray und Lösemitteldämpfen beladen ist. Die Luftabflussleitung 13 führt zu einem Kombinationsabscheider 16, dessen Aufbau weiter unten beschrieben wird. In diesem Kombinationsabscheider 16 scheiden sich die Lacktröpfchen weitestgehend aus der Luftströmung ab; die Lösemitteldämpfe kondensieren und abgeschiedener Lack sowie kondensiertes Lösemittel strömen über eine Leitung 17 in einen ersten Lackbehälter 18. Auch die Lackabflussleitung 12, die von der Spritzkabine 2 kommt, mündet in diesen ersten Lackbehälter 18. Dort wird mittels eines Überlaufes 19 ein bestimmtes Niveau der Lack-Lösemittelmischung aufrecht erhalten; die Mündungen sowohl der Lackabflussleitung 12 als auch der von dem Kombinationsabscheider 16 kommenden Leitung 17 liegen unterhalb dieses Spiegels.

Die mit Hilfe des Kombinationsabscheiders 16 bereits weitgehend von Lösemittel und Lackpartikeln befreite Luftströmung wird über eine Zweigleitung 20 einem elektrostatischen Nachfilter 21 zugeführt. Auch der Aufbau dieses elektrostatischen Nachfilters 21 wird weiter unten näher erläutert. Die hier abgeschiedenen Lackpartikel fließen über eine weitere Leitung 22 in einen zweiten Lackbehälter 23. Auch in diesem wird mit Hilfe eines Auslaufes 24 ein bestimmter Spiegel aufrechterhalten, unterhalb dessen die Leitung 22 einmündet.

Die in dem elektrostatischen Nachfilter 21 nachgereinigte Luft wird über eine Leitung 25 dem Gebläse 10 und von dort über die Leitung 9 dem Luftplenum 7 der Spritzkabine 2 zugeführt, womit der Luftkreislauf geschlossen ist.

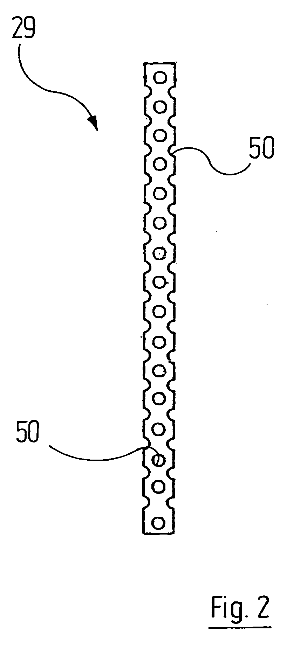

Der Kombinationsabscheider 16 ist wie folgt aufgebaut: In einem gasdichten Gehäuse 26 verlaufen parallel zueinander von einem oberen Einlass 27 zu einem unteren Auslass 28 mehrere besonders ausgestaltete Wärmetauscherrohre 29, die in Figur 1 nur schematisch und in Figur 2 in größerem Maßstab und im Detail dargestellt sind. Diese Wärmetauscherrohre 29 zeichnen sich dadurch aus, dass sie durch Eindellungen und/oder Erhebungen in ihrer Umfangswand verformt sind, wie dies der Figur 2 zu entnehmen ist. Derartige Wärmetauscherrohre 29 sind an und für sich für einen anderen Anwendungszweck aus der DE 10 350 765 B4 bekannt.

Die oberen Enden der Wärmetauscherrohre 29 sind so angeschlossen, dass ihre Innenräume mit der Luftauslassleitung 13 kommunizieren. In entsprechender Weise sind die unteren Enden der Wärmetauscherrohre 29 so angeschlossen, dass ihre Innenräume mit der Leitung 17 und damit auch mit der Zweigleitung 20 kommunizieren. Diese Innenräume werden also von der Luft auf dem Weg durch den Kombinationsabscheider 16 durchströmt.

Der außerhalb der Wärmetauscherrohre 29 liegende Innenraum des Gehäuses 26 des Kombinationsabscheiders 16 wird von einem Kältemittel durchströmt. Dieses wird dem Innenraum des Kombinationsabscheiders 16 über eine Leitung 30 zugeführt und aus diesem Innenraum über eine weitere Leitung 31 entnommen. Die Leitung 31 führt zu einem Gebläse 32 und von dort über eine weitere Leitung 33 zu einem Wärmetauscher 34. In dem Wärmetauscher 34 wird das Kältemittel in noch zu beschreibender Weise auf eine Temperatur abgekühlt, die unterhalb des Taupunktes des Lösemittels liegt, welches den Kombinationsabscheider 16 in der Luft durchströmt.

Der Wärmetauscher 34 enthält eine Kühleinrichtung 35, die als Wärmequelle für eine Wärmepumpe 36 geschaltet ist. Die dem Kältemittel, welches den Wärmetauscher 34 von der Leitung 33 zur Leitung 30 durchströmt, entnommene Wärme wird von der Wärmepumpe 36 einem Wärmekreislauf zugeführt, welcher ein in einer Vorlaufleitung 37 liegendes Gebläse 38, eine Heizeinrichtung 39 und eine Rücklaufleitung 40 umfasst. Die Heizeinrichtung 39 liegt in der von dem elektrostatischen Nachfilter 21 kommenden Leitung 25 und wärmt die darin strömende Luft wieder auf.

In die Leitung 25 kann außerdem über eine Leitung 41, in welcher ein Ventil 42 liegt, frische Luft eingegeben werden.

Das elektrostatische Nachfilter 21 umfasst ein rohrförmiges Gehäuse 43 aus Metall, welches geerdet ist. In der Achse des Gehäuses 43 ist zwischen zwei Isolatoren 44, 45 ein Koronadraht 46 gespannt, der mit Hilfe eines Hochspannungsgenerators 47 auf Hochspannung gelegt werden kann.

Die oben beschriebene Lackieranlage 1 arbeitet wie folgt:
Die zu lackierenden Gegenstände 6 werden mit Hilfe der Fördereinrichtung 5 senkrecht zur Zeichenebene der Figur 1 kontinuierlich oder intermittierend durch den Innenraum der Spritzkabine 2 geführt und dabei mit Hilfe der Applikationseinrichtungen 14, 15 mit Lack besprüht. In dem trichterförmigen Leitblech 11 sammelt sich nach Art einer "Grobabscheidung" flüssiger Lack an, der dann über die Lackabflussleitung 12 auf direktem Wege in den ersten Lackbehälter 18 abgeleitet wird.

Ein erheblicher Teil des Lack-Oversprays wird jedoch zusammen mit den beim Lackiervorgang freiwerdenden Lösemitteldämpfen in dem Luftstrom über die Leitung 13 der Wiedergewinnungsanlage 3 zugeführt. Dabei wird die Lackieranlage 1 insgesamt so gefahren, dass die Lösemittelkonzentration in dem Luftstrom einen Wert erreicht, bei dem der Taupunkt des Lösemittels über dem Gefrierpunkt von Wasser liegt. Beispielsweise wird bei Butylacetat als Lösemittel und einer Konzentration von 30 Gramm pro Normkubikmeter ein Taupunkt von etwa 3 °C erreicht. Die fragliche Konzentration liegt über der Explosionsgrenze und es müssen daher besondere Vorsichtsmaßnahmen für einen Explosionsschutz getroffen werden, wie sie jedoch an und für sich bekannt sind.

In dem Kombinationsabscheider 16 geschieht nunmehr Folgendes:
Die Lösemitteldämpfe, welche die Wärmetauscherrohre 29 durchströmen, werden an den Umfangswänden dieser Wärmetauscherrohre 29 auskondensiert, da diese Umfangswände mit Hilfe des den Wärmetauscher 34 durchströmenden Kältemittels auf eine Temperatur gebracht sind, die unterhalb des Taupunktes des Lösemittels liegt. Da, wie oben schon erwähnt, der Taupunkt aufgrund der Konzentration des Lösemittels verhältnismäßig hoch liegt, ist die entsprechende Abkühlung der Umfangswände der Wärmetauscherrohre 29 unproblematisch.

Aufgrund der Verformungen der Umfangswände der Wärmetauscherrohre 29 entstehen zusätzlich in der durchströmenden, mit Lösemittel und Lack beladenen Luft Wirbel, durch welche die schwereren Lackpartikel an die Umfangswände geschleudert werden, wo sie anhaften. Dort vereinigen sie sich mit dem aufgrund der Kühlwirkung abgeschiedenen Lösemittel und können so einfach unter dem Einfluss der Schwerkraft nach unten in die Leitung 17 abfließen und gelangen von dort in den ersten Lackbehälter 18.

Abhängig von der Art des Lackes kann es vorkommen, dass Lack und/oder Lackpartikel an den Umfangswänden der Wärmetauscherrohre 29 haften bleiben, wodurch sich die Wärmetauscherrohre 29 mit der Zeit zusetzten können. In diesem Fall werden die Wärmetauscherrohre 29 durch separate Reinigungsvorgänge von diesen Lackresten befreit, indem sie beispielsweise von einem geeigneten Lösemittel durchspült werden. Derartige Reinigungsvorgänge können gegebenenfalls in regelmäßigen zeitlichen Abständen durchgeführt werden.

Auf diese Weise ist die die Zweigleitung 20 durchströmende Luft schon weitgehend von Lack gereinigt und die Konzentration des Lösemittels reduziert. Nun erfolgt innerhalb des elektrostatischen Nachfilters 21 eine Nachreinigung. Hierzu werden mit Hilfe des Koronadrahtes 46 die Lackpartikel ionisiert und sodann durch das zwischen dem Koronadraht 46 und dem metallischen Gehäuse 43 des elektrostatischen Nachfilters 21 herrschende elektrische Feld auf die Innenmantelfläche des Gehäuses 43 gezogen. Dort scheidet sich der Lack ab und kann erneut unter dem Einfluss der Schwerkraft über die Leitung 22 in den zweiten Lackbehälter 23 abströmen. Die einerseits in dem Kombinationsabscheider 16 und andererseits in dem elektrostatischen Nachfilter 21 abgeschiedenen Lackmengen werden bewusst nicht in denselben Lackbehälter sondern in zwei unterschiedliche Lackbehälter 18, 23 geleitet, da die von dem Koronadraht 46 erzeugte Korona zu einem gewissen Anteil ein Reagieren des Lackes zur Folge hat, so dass der sich in dem Lackbehälter 23 sammelnde Lack in gewissem Umfang ausgehärtete Lackteilchen enthalten kann. Diese müssen vor einer Wiederverwendung des hier gewonnenen Lackes durch geeignete Maßnahmen, beispielsweise durch Filtrieren, abgesondert werden.

Aufgrund der Kühlwirkung der Wärmetauscherrohre 29 in dem Kombinationsabscheider 16 besitzt die Luft, welche das elektrostatische Nachfilter 21 verlässt, eine Temperatur, die unterhalb der in der Spritzkabine 2 herrschenden und für den Lackiervorgang notwendigen Temperatur liegt. Mit Hilfe der Heizeinrichtung 39 wird daher der in die Spritzkabine 2 zurückgeführten Luft im Wesentlichen diejenige Wärme wieder zugeführt, die ihm in dem Kombinationsabscheider 16 mit Hilfe des dort strömenden Kältemittels entzogen wurde. Auf diese Weise erreicht das über die Leitung 9 in das Luftplenum 7 und von dort in den Innenraum der Spritzkabine 2 zurückgeführte Luft wieder ohne großen Energieverlust die zum Lackieren notwendige Temperatur, z.B. 22°C.

## Patentansprüche

1. Anlage zum Lackieren von Gegenständen, insbesondere von Fahrzeugkarosserien oder Anbauteilen, mit
a) einer Spritzkabine (2), in welcher die Gegenstände (6) mit einem Lack beaufschlagt werden;
b) einer Einrichtung (5), welche einen die Spritzkabine (2) von oben nach unten durchsetzenden Strom eines Fluids erzeugt, der beim Lackiervorgang entstehenden Overspray und gegebenenfalls Lösemittel aufnimmt;
c) einer Wiedergewinnungsanlage (3) zur Wiedergewinnung des Oversprays und gegebenenfalls von Lösemittel,
**dadurch gekennzeichnet, dass**
d) die Wiedergewinnungsanlage (3) mindestens ein im Wesentlichen senkrecht stehendes Rohr (29) umfasst, das von dem aus der Spritzkabine (2) herausgeführten und mit Overspray sowie gegebenenfalls Lösemittel beladenen Fluid durchströmbar ist und dessen Oberfläche so mit Erhebungen und/oder Vertiefungen (50) versehen ist, dass sich in dem durchströmenden Fluid Wirbel bilden und der Lack-Overspray sich an der Umfangswand abscheidet und nach unten aus dem Rohr (29) abfließt.

2. Anlage nach Anspruch 1, **dadurch gekennzeichnet, dass** das Rohr (29) unter eine Temperatur abkühlbar ist, die dem Taupunkt des Lösemittels in dem das Rohr (29) durchströmenden Fluid entspricht, derart, dass das Lösemittel an der Umfangswand des Rohres (29) auskondensiert und gemeinsam mit dem Overspray aus diesem nach unten abfließt.

3. Anlage nach Anspruch 2, **dadurch gekennzeichnet, dass** die Lösemittelkonzentration in dem das Rohr (29) durchströmenden Fluid so hoch ist, dass der Taupunkt des Lösemittels über dem Gefrierpunkt von Wasser liegt.

4. Anlage nach Anspruch 3, **dadurch gekennzeichnet, dass** das Lösemittel Butylacetat ist und die Lösemittelkonzentration über 30g pro Normkubikmeter beträgt oder dass das Lösemittel Xylol ist und Lösemittelkonzentration über 10g pro Normkubikmeter beträgt.

5. Anlage nach einem der Ansprüche 2 bis 4, **dadurch gekennzeichnet, dass** eine Wärmepumpe (36) vorgesehen ist, welche das das Rohr (29) durchströmende, beladene Fluid abkühlt und das gereinigte Fluid vor dessen Rückführung in die Spritzkabine (2) wieder aufwärmt.

6. Anlage nach einem der vorhergehenden Ansprüche, **dadurch gekennzeichnet, dass** dem mindestens einen von beladenem Fluid durchströmbaren Rohr (29) ein elektrostatisches Nachfilter (21) für das vorgereinigte Fluid nachgeschaltet ist.

7. Anlage nach Anspruch 6, **dadurch gekennzeichnet, dass** für den in dem mindestens einen Rohr (29) und den in dem elektrostatischen Nachfilter (21) gewonnenen Overspray getrennte Lackbehälter (18, 23) vorgesehen sind.

## Claims

1. System for painting objects, in particular vehicle bodies or add-on parts, having
a) a spray booth (2) in which a paint is applied to the objects (6);
b) a device (5) which generates a stream of a fluid which permeates through the spray booth (2) from top to bottom and which absorbs overspray produced during the painting operation and, where appropriate, solvent;
c) a recovery system (3) for recovering the overspray and, where appropriate, solvent,
**characterized in that**
d) the recovery system (3) comprises at least one substantially vertically arranged tube (29) through which the fluid guided out of the spray booth (2) and laden with overspray and, where appropriate, solvent can flow and a surface of which is provided with projections and/or recesses (50) so that turbulences form in the fluid flowing through the tube and the paint overspray is deposited on the peripheral wall and flows downwards out of the tube (29).

2. System according to claim 1, **characterized in that** the tube (29) can be cooled below a temperature that corresponds to a dew point of the solvent in the fluid flowing through the tube (29), so that the solvent condenses on the peripheral wall of the tube (29) and, flows downwards out of the tube, together with the overspray.

3. System according to claim 2, **characterized in that** the concentration of the solvent in the fluid flowing through the tube (29) is so high that the dew point of the solvent is above the freezing point of water.

4. System according to claim 3, **characterized in that** the solvent is butyl acetate and the concentration is over 30 g per standard cubic meter or the solvent is xylene and the concentration is over 10 g per standard cubic meter.

5. System according to any of the claims 2 to 4, **characterized in that** a heat pump (36) is provided which cools the laden fluid flowing through the tube (29) and which heats the cleaned fluid again before it is returned to the spray booth (2).

6. System according to any of the preceding claims, **characterized in that** an electrostatic after-filter (21) for the pre-cleaned fluid is provided downstream of the at least one tube (29) through which the laden fluid can flow.

7. System according to claim 6, **characterized in that** separate paint containers (18, 23) are provided for the overspray obtained in the at least one tube (29) and the overspray obtained in the electrostatic after-filter (21).

## Revendications

1. Installation pour la peinture d'objets, en particulier de carrosseries de véhicules ou de pièces rapportées, avec
a) une cabine de pulvérisation (2), dans laquelle les objets (6) sont sollicités par de la peinture ;
b) un dispositif (5), qui produit un flux de fluide qui traverse la cabine de pulvérisation (2) du haut vers le bas et entraîne l'excédent de peinture et éventuellement le solvant produits lors de l'opération de peinture ;
c) une installation de récupération (3) destinée à récupérer l'excédent de peinture et éventuellement le solvant,
**caractérisée en ce que**
d) l'installation de récupération (3) comprend au moins un tube (29) placé sensiblement à la verticale, qui peut être parcouru par le fluide dirigé hors de la cabine de pulvérisation (2) et chargé de l'excédent de peinture et éventuellement de solvant, et dont la surface est pourvue de bossages et/ou de renfoncements (50) de telle sorte que des tourbillons se forment dans le fluide qui s'écoule et que l'excédent de peinture se dépose sur la paroi périphérique et s'écoule vers le bas hors du tube (29).

2. Installation selon la revendication 1, **caractérisée en ce que** le tube (29) peut être refroidi en dessous d'une température qui correspond au point de condensation du solvant dans le fluide parcourant le tube (29), de telle sorte que le solvant se condense sur la paroi périphérique du tube (29) et s'écoule vers le bas hors du tube conjointement avec l'excédent de peinture.

3. Installation selon la revendication 2, **caractérisée en ce que** la concentration de solvant dans le fluide parcourant le tube (29) est d'un montant tel que le point de condensation du solvant se situe au-dessus du point de congélation de l'eau.

4. Installation selon la revendication 3, **caractérisée en ce que** le solvant est de l'acétate de butyle et la concentration de solvant est supérieure à 30 g par mètre cube étalon, ou **en ce que** le solvant est du xylène et la concentration de solvant est supérieure à 10 g par mètre cube étalon.

5. Installation selon l'une des revendications 2 à 4, **caractérisée en ce qu'**il est prévu une pompe à chaleur (36), qui refroidit le fluide chargé parcourant le tube (29) et qui réchauffe le fluide épuré avant qu'il soit ramené dans la cabine de pulvérisation (2).

6. Installation selon l'une des revendications précédentes, **caractérisée en ce qu'**un filtre secondaire électrostatique (21), destiné au fluide pré-épuré, est placé après le tube au moins unique (29) pouvant être parcouru par du fluide chargé.

7. Installation selon la revendication 6, **caractérisée en ce que** des récipients de peinture séparés (18, 23) sont prévus pour l'excédent de peinture récupéré dans le tube au moins unique (29) et pour l'excédent de peinture récupéré dans le filtre secondaire électrostatique (21).
